# EUROPÄISCHE PATENTSCHRIFT

(11) **EP 3 013 452 B1**
(45) Veröffentlichungstag und Bekanntmachung des Hinweises auf die Patenterteilung: **11.12.2019**
(21) Anmeldenummer: 14743989.7
(22) Anmeldetag: 28.05.2014
(51) Int. Cl.: B01D 46/00, B01D 46/10, B01D 46/52, B01D 29/01

(54) **FLÄCHIGES MEDIUM MIT EINEM ANBINDEELEMENT**
FLAT MEDIUM WITH A CONNECTING ELEMENT
SUPPORT PLAT AVEC ÉLÉMENT DE FIXATION

(30) Priorität: 28.06.2013 DE 102013010777
(43) Veröffentlichungstag der Anmeldung: 04.05.2016
(73) Patentinhaber: Carl Freudenberg KG, 69469 Weinheim (DE)
(72) Erfinder: HAEFNER, Uwe, 77964 Kehl (DE); DOBNER, Roland, 69483 Wald-Michelbach (DE); SANDER, Harald, 69509 Moerlenbach (DE)
(86) Internationale Anmeldenummer: PCT/EP2014/001439
(87) Internationale Veröffentlichungsnummer: WO 2014/206522

(56) Entgegenhaltungen:
- EP-A1- 1 031 594
- DE-A1- 2 449 330
- DE-A1- 10 253 825
- DE-U1-202005 019 611

## Beschreibung

### Technisches Gebiet

Die Erfindung betrifft ein Filterelement gemäß dem Oberbegriff des Patentanspruchs 1.

### Stand der Technik

Aus der DE 199 58 344 A1 ist eine Anordnung bekannt, die ein flächiges Medium, bestehend aus Fasern, und ein Anbindeelement aus Kunststoff umfasst, welches mit dem Medium stoffschlüssig und/ oder kraftschlüssig verbunden ist. Bei dem Medium handelt es sich konkret um einen Faltenbalg aus Vliesstoff, der Kunststoff ist spritzgießbar.

Aus dem Stand der Technik sind neben spritzgießbaren Kunststoffen auch Partikelschäume bekannt. Partikelschäume bestehen aus Schaumperlen aus thermoplastischen Kunststoffen. Diese weisen üblicherweise Dichten im Bereich von 15 bis 80 kg/m³ auf. Partikelschäume zeigen gute mechanische Eigenschaften, eine hohe thermische Isolierfähigkeit und sind für Leichtbauten gut geeignet. Die Schaumperlen können mit Hilfe von Wasserdampf zu Formteilen geformt werden.

Vor diesem Hintergrund ist konkret bekannt, Polystyrolgranulat, in welchem das Treibmittel Pentan einpolymerisiert ist, mit Temperaturen über 100°C zu behandeln. Während der Behandlung verdampft das Pentan und bläht das thermoplastische Granulat zu Polystyrol-Schaumperlen auf. Aus diesen Schaumperlen können dann in diskontinuierlich oder kontinuierlich arbeitenden Werkzeugen durch eine Heißdampfbehandlung Blöcke, Platten oder Formteile hergestellt werden. Schaumperlen für Partikelschäume können beispielsweise aus EPE (expandiertes Polyethylen), EPP (expandiertes Polypropylen) oder aus thermoplastischen Kunststoffen bestehen.

Ein Verfahren zur Herstellung von Formteilen aus Partikelschäumen ist aus der EP 1 299 219 B1 bekannt geworden. Diese Formteile werden mit einer Deckschicht aus einem Polymer verbunden.

Aus der DE 10 2011 078 668 A1 ist bekannt geworden, eine spritzgusstechnisch gefertigte Hartschale stoffschlüssig mit einem Partikelschaum zu verbinden. DE 20 2005 019611 U1 offenbart ein Filterelement mit plissiertem Medium, welches einen Seitenstreifen aus Partikelschaum aufweist. Die DE 2449330 offenbart einen Filter mit Filterbeuteln, deren Ränder innerhalb eines umlaufenden Hohlrahmens mittels Partikelschaum abgedichtet sind.

Die eingangs erwähnten spritzgießbaren Kunststoffe sind nur unter Verwendung relativ teurer Werkzeuge verarbeitbar.

### Darstellung der Erfindung

Der Erfindung liegt daher die Aufgabe zugrunde, eine Anordnung der eingangs genannten Art derart auszugestalten und weiter zu bilden, dass diese nach kostengünstiger Fertigung ein geringes Gewicht aufweist und mit stabilen und elastischen Anbindeelementen versehen ist.

Die vorliegende Erfindung löst die zuvor genannte Aufgabe durch die Merkmale des Patentanspruchs 1.

Erfindungsgemäß ist zunächst erkannt worden, dass Anbindeelemente aus Partikelschaum eine hohe Elastizität aufweisen. Darauf ist erkannt worden, dass solche Anbindeelemente sehr gute Körperschalleigenschaften zeigen, nämlich aufgrund ihrer Weichheit Körperschall schlecht transportieren. Weiter ist erkannt worden, dass Anbindeelemente aus Partikelschäumen sehr leicht sind, eine glatte Oberfläche aufweisen und der gesamten Anordnung ein geringes Gewicht verleihen. Schließlich ist erkannt worden, dass Partikelschäume leicht nachbearbeitbar sind. Insoweit ist eine Anordnung angegeben, die nach kostengünstiger Fertigung ein geringes Gewicht aufweist und mit stabilen und elastischen Anbindeelementen versehen ist. Das Medium ist plissiert. Hierdurch kann das Medium einen Faltenbalg ausbilden. Durch die Falten wird die Filterfläche pro Volumen erhöht.

Ein Anbindeelement ist als Rahmen ausgebildet, welcher das Medium ringsum umgibt. Ein Rahmen kann das Medium, insbesondere einen Faltenbalg, stabilisieren. Des Weiteren kann der Rahmen als Formteil ausgebildet sein, welches komplementär zu einem Gehäuse ausgebildet ist. Durch Verwendung eines Rahmens aus einem Partikelschaum können Werkzeugkosten für Spritzgießmaschinen eingespart werden. Überdies sind Rahmen aus Partikelschäumen leichter als spritzgegossene Rahmen und reduzieren Körperschallübertragungen. Außerdem kann auf umschäumte Rahmen aus Polyurethan verzichtet werden, welche relativ hohe Kosten verursachen und hohe Arbeitsschutzmaßnahmen erfordern.

Folglich ist die eingangs genannte Aufgabe gelöst.

Das Medium könnte mehrlagig und/ oder mehrschichtig ausgestaltet sein. Hierdurch können sogenannte Kombifilter erzeugt werden, die Partikel und Gerüche adsorbieren. Die stoffschlüssige Verbindung des Anbindeelements gelingt überraschenderweise auch bei mehrlagigen flächigen Medien. Daher sind Kombinationen aus flächigen Lagen zu Flächengebilden zur Partikelabscheidung, beispielsweise Kombinationen aus Papieren, Spinn- und Stapelfaservliesen, denkbar. Es ist auch denkbar, adsorptive Flächengebilde anzufertigen, beispielsweise Lagen aus Aktivkohle, Zeolithen, Silikagelen und/ oder chemisch und/ oder physikalisch wirksame Schichten zu kombinieren.

Das Medium könnte als Vliesstoff ausgestaltet sein oder einen Vliesstoff aufweisen. Durch diese konkrete Ausgestaltung kann die Anordnung als Filterelement verwendet werden. Überraschend wurde erkannt, dass Partikelschäume relativ problemlos mit Vliesstoffen verbunden werden können, obwohl bei der Fertigung des Partikelschaums hohe Temperaturen auftreten können. Der Fachmann hätte erwartet, dass ein Vliesstoff bei diesen Temperaturen schmilzt und Schaden nimmt. Diese Vorurteile der Fachwelt wurden erfolgreich überwunden.

Vor diesem Hintergrund könnte das Medium als Papier ausgestaltet sein oder ein Papier aufweisen. Papiere sind sehr gut als Filtermedium geeignet und können überraschend gut mit Partikelschäumen stoffschlüssig oder kraftschlüssig verbunden werden.

Ein Anbindeelement könnte als Dichtung ausgebildet sein. Hierdurch kann ein Medium, insbesondere ein Filtermedium, gegen Gehäusewände, insbesondere eines Filtergehäuses, abgedichtet werden.

Ein Anbindeelement könnte als flächiger Seitenstreifen ausgebildet sein. Durch diese Maßnahme können geklebte Seitenstreifen, welche üblicherweise aus einem Vliesstoff bestehen, eingespart werden. Klebeverbindungen, die zu schlechten Leckagewerten führen, können so vermieden werden. Außerdem können übliche Klebeverbindungen bei 100 °C gelöst werden. Partikelschäume sind hingegen weitaus temperaturbeständiger. Bevorzugt weist ein solcher Seitenstreifen eine Dicke von 3 mm auf.

Ein Filterelement könnte eine Anordnung der hier beschriebenen Art umfassen, wobei das Medium als Filtermedium ausgestaltet ist. Solche Filterelemente zeigen ein sehr geringes Gewicht und eine hohe Stabilität. Die Filterelemente können zur Filterung von Motorzuluft, zur Filterung von Luft von Innenräumen, als Luftfilter und als Flüssigkeitsfilter verwendet werden. Die Filterelemente können in Kraftfahrzeugen verwendet werden.

Partikelschäume können in unterschiedlichen Farben verwendet werden. Partikelschäume sind gemeinsam mit dem Medium leicht recyclebar, wenn das Medium und der Partikelschaum aus dem gleichen Polymer, beispielsweise Polypropylen, bestehen.

### Kurzbeschreibung der Zeichnung

In der Zeichnung zeigen
- Fig. 1: ein Werkzeug, in welchem Granulat und/ oder Schaumperlen und ein flächiges Medium aufgenommen sind, wobei das Granulat bzw. die Schaumperlen derart behandelbar ist bzw. sind, dass das flächige Medium von einem Partikelschaum stoffschlüssig aufgenommen wird,
- Fig. 1a: eine Anordnung, welche durch das Werkzeug gemäß Fig. 1 hergestellt ist,
- Fig. 2: eine Schnittansicht eines Filterelements, an dessen Seiten Seitenstreifen und Dichtungen aus Partikelschaum angeordnet sind,
- Fig. 3: eine Draufsicht auf ein rechteckiges Filterelement, dessen Faltenbalg von einem Rahmen aus Partikelschaum ringsum eingefasst ist, und
- Fig. 4: eine Draufsicht auf ein unregelmäßig geformtes Filterelement, dessen Faltenbalg von einem Rahmen aus Partikelschaum ringsum eingefasst ist.

### Ausführung der Erfindung

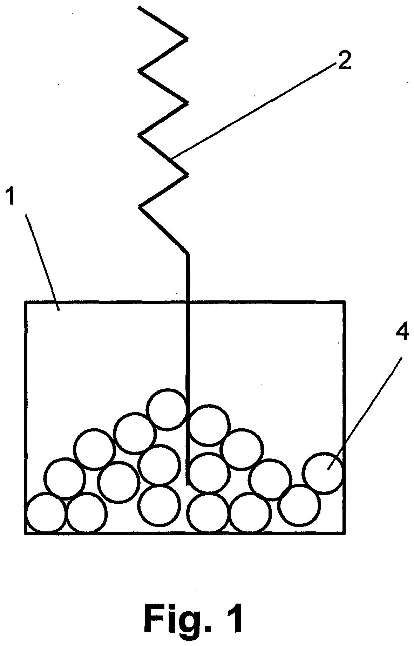

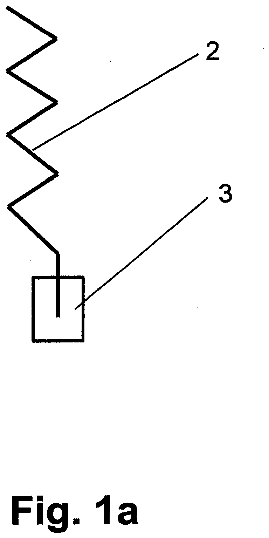

Fig. 1 zeigt ein Werkzeug 1 zur Herstellung einer Anordnung gemäß Fig. 1a, welche ein flächiges Medium 2, bestehend aus Fasern, und ein Anbindeelement 3 aus Kunststoff umfasst, welches mit dem Medium 2 stoffschlüssig verbunden ist. Das Anbindeelement 3 wird und ist aus einem Partikelschaum gefertigt.

Im Werkzeug 1 sind Schaumperlen 4 oder Granulat aufgenommen, welche in bekannter Weise zu einem Anbindeelement 3 aus Partikelschaum umgewandelt werden. Während der Umwandlung geht der entstehende Partikelschaum eine stoffschlüssige Verbindung mit dem Medium 2 ein. Das Medium 2 ist als Vliesstoff ausgestaltet. Das Medium 2 ist plissiert.

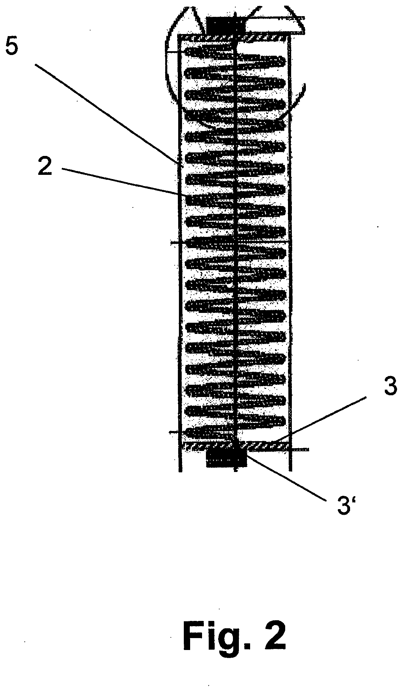

Fig. 2 zeigt ein Filterelement 5, umfassend eine Anordnung der zuvor beschriebenen Art, wobei das Medium 2 als Filtermedium ausgestaltet ist. Das Medium 2 ist als Vliesstoff ausgestaltet. Das Medium 2 ist plissiert und bildet einen Faltenbalg. Das Anbindeelement 3 ist als flächiger Seitenstreifen ausgebildet. Es ist ein weiteres Anbindeelement 3' vorgesehen, welches als Dichtung ausgebildet ist.

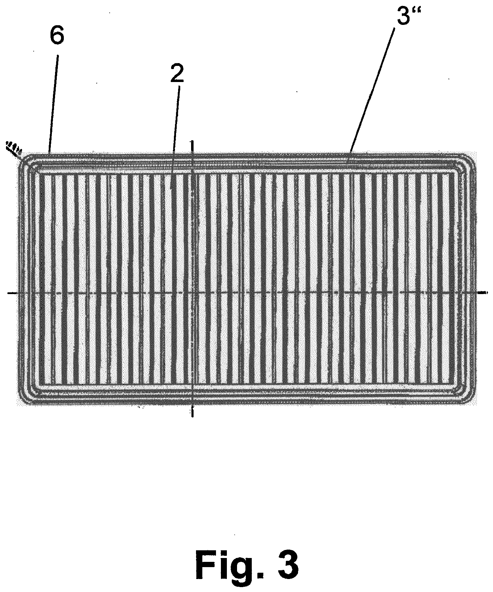

Fig. 3 zeigt ein im Wesentlichen rechteckiges Filterelement 6, bei welchem das Anbindeelement 3" als Rahmen ausgebildet ist, welcher das Medium 2 ringsum umgibt. Das Medium 2 ist als Filtermedium ausgestaltet und gefaltet.

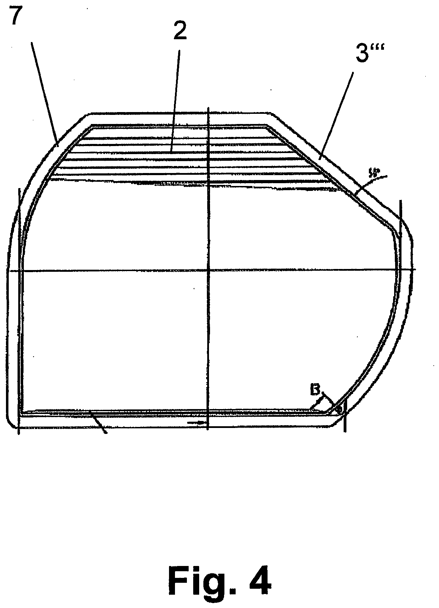

Fig. 4 zeigt ein weiteres Filterelement 7, bei welchem das Anbindeelement 3'" als Rahmen ausgebildet ist, welcher das Medium 2 ringsum umgibt. Das Medium 2 ist als Filtermedium ausgestaltet und gefaltet.

## Patentansprüche

1. Filterelement (5), umfassend eine Anordnung, mit einem flächigen Medium (2) als Filtermedium, bestehend aus Fasern und mit einem Anbindeelement (3, 3', 3", 3"') aus Kunststoff, welches mit dem Medium (2) stoffschlüssig verbunden ist,
wobei das Anbindeelement (3, 3', 3", 3"') aus einem Partikelschaum gefertigt ist, wobei die stoffschlüssige Verbindung des Mediums (2) mit dem Anbindelement (3, 3', 3", 3"') während der Umwandlung des Partikelschaums erfolgt ist,
**dadurch gekennzeichnet, dass**
das Medium (2) plissiert ist und, dass das Anbindeelement (3", 3"') als Rahmen ausgebildet ist, welcher das Medium (2) ganz oder teilweise ringsum umgibt.

2. Filterelement nach Anspruch 1, **dadurch gekennzeichnet, dass** das Medium (2) mehrlagig und/ oder mehrschichtig ausgestaltet ist.

3. Filterelement nach Anspruch 1 oder 2, **dadurch gekennzeichnet, dass** das Medium (2) als Vliesstoff ausgestaltet ist oder einen Vliesstoff aufweist.

4. Filterelement nach einem der voranstehenden Ansprüche, **dadurch gekennzeichnet, dass** das Medium (2) als Papier ausgestaltet ist oder Papier aufweist.

## Claims

1. Filter element (5) comprising an assembly with a flat medium (2) as filter medium, consisting of fibres and having a plastic connecting element (3, 3', 3", 3"'), which is connected integrally to the medium (2),
wherein the connecting element (3, 3', 3", 3"') is made of a particle foam, wherein the integral connection of the medium (2) to the connecting element (3, 3', 3", 3"') is carried out during the conversion of the particle foam,
**characterized in that**
the medium (2) is pleated, and **in that** the connecting element (3", 3"') is formed as a frame, which surrounds the medium (2) entirely or partially all around.

2. Filter element according to Claim 1, **characterized in that** the medium (2) is configured in multiple plies and/or multiple layers.

3. Filter element according to Claim 1 or 2, **characterized in that** the medium (2) is configured as nonwoven material or comprises a nonwoven material.

4. Filter element according to one of the preceding claims, **characterized in that** the medium (2) is configured as paper or comprises paper.

## Revendications

1. Élément filtrant (5) comprenant un ensemble qui comporte un milieu (2) plat, servant de milieu filtrant et formé de fibres et un élément de liaison (3, 3', 3", 3"') en matière synthétique qui est relié par une liaison de matière au milieu (2),
l'élément de liaison (3, 3', 3", 3"') étant produit à partir d'une mousse de particules, la liaison de matière du milieu (2) avec l'élément de liaison (3, 3', 3'', 3"') étant réalisée pendant la transformation de la mousse de particules,
**caractérisé en ce que**
le milieu (2) est plissé et **en ce que** l'élément de liaison (3", 3"') est conçu comme un cadre qui entoure totalement ou partiellement le milieu (2) de manière annulaire.

2. Élément filtrant selon la revendication 1, **caractérisé en ce que** le milieu (2) est conçu en sandwich et/ou plusieurs couches.

3. Élément filtrant selon la revendication 1 ou 2, **caractérisé en ce que** le milieu (2) est conçu comme un non-tissé ou comporte un non-tissé.

4. Élément filtrant selon l'une des revendications précédentes, **caractérisé en ce que** le milieu (2) est conçu en papier ou comporte du papier.
